# EUROPEAN PATENT SPECIFICATION

(11) **EP 2 926 954 B1**
(45) Date of publication and mention of the grant of the patent: **07.05.2025**
(21) Application number: 15075013.1
(22) Date of filing: 09.03.2015
(51) Int. Cl.: B25J 5/00, B25J 15/10, B23Q 7/04

(54) **Method for turning a workpiece and use of an accessory therefor**
Verfahren zum Umdrehen eines Werkstücks und Verwendung eines Zubehörs dafür
Procédé pour retourner une pièce à usiner et utilisation d'un accessoire à cet effet

(30) Priority: 31.03.2014 BE 201400219
(43) Date of publication of application: 07.10.2015
(73) Proprietor: ROBOJOB, naamloze vennootschap, 2220 Heist-op-den-Berg (BE)
(72) Inventor: DE ROOVERE, Helmut, 3140 Keerbergen (BE); DE CEUSTER, Luc Marcel Joseph, 2230 Herselt (BE)
(74) Representative: Philippaerts, Yannick

(56) References cited:
- JP-A- S5 815 691
- JP-A- S5 856 705
- JP-A- S60 150 940
- US-A- 1 361 345
- US-A- 5 833 512
- US-B1- 6 266 902
- MEDIASTAGE KY - VIDEOTUOTANTOA: "Fastems Roadshow - Esittelyvideo", 6 April 2009 (2009-04-06), XP093217697, Retrieved from the Internet <URL:https://www.youtube.com/watch?v=jQ_UypZgldo> [retrieved on 20210118]

## Description

The present invention relates to a method for turning a workpiece around.

More specifically, the invention is intended for turning around a workpiece using a robot equipped with a three-point gripper.

The method can be used without limitation to enable the clamping of a workpiece, that is clamped by one end in a machine tool, by its other end in the machine tool, whereby the robot can take the workpiece from the machine tool and then affix it in the machine tool by its other end after application of the method.

The aforementioned machine tool can be a CNC machine or a computer-controlled machine tool for example, such as a lathe, milling machine, cylindrical grinder or similar.

It is known that in a machine tool a workpiece is clamped by one end in clamping means provided for this purpose, such as a chuck for example, after which the free end is machined.

Then the workpiece is taken from the machine and its machined end is inserted in the aforementioned clamping means of the machine tool so that the other, unmachined end can be finished by the machine tool.

The workpiece has to be put back very accurately so that the further finishing of the workpiece can be done correctly.

The removal and replacement of the workpiece can be done manually, for example by the machine operator.

However, this is relatively slow because it has to be done with great accuracy. Moreover, such a method is prone to errors in the positioning and alignment of the workpiece.

A robot can also be used for taking out the workpiece and putting it back.

This robot is provided with a robotic arm, for example, that is equipped with a gripper with radially movable claws with which the workpieces can be gripped at one end along their periphery.

When the robot has taken the workpiece out of the machine tool the robot has to release the workpiece, for example on a table and grip it from the other side, before placing the workpiece back in the machine tool in the clamping means provided to this end.

After releasing, the workpiece is turned around, for example manually or by machine so that the robot can grip the machined end.

This step takes extra time and can cause inaccuracies when done manually. By machine, errors can also occur due to an incorrect alignment of the reversing machine with respect to the robot. An extra machine must also be provided, which brings about extra costs and makes the entire apparatus more complex.

It is also known to use an accessory in the form of a horizontal plate on the upper surface of which the workpiece is placed by the robot and released. The robot then moves to the lower surface of the plate and re-grips the workpiece from the underside. This is shown in the patent document JP S 60 150940 A and in the YouTube video "Fastems Easy Automation Road Show"(https://www.youtube.com/watch?v=jQ_UypZgldo). In these documents, the plates are respectively provided with a slot in which one or several claws of a robotic gripper can engage. However, the shape of the plates and the width of their slot only allow a small range of possible diameters for the workpieces to be gripped.

The method according to the invention can also be used for turning around workpieces in a stock, for example. This is often done manually, which leads to inaccuracies, or with a device or machine specially designed and provided for this purpose, which is of course expensive and complex.

The purpose of the present invention is to provide a solution to a least one of the aforementioned and other disadvantages.

The purpose of the present invention is to provide a method for turning a workpiece around using a robot equipped with a three-point gripper with three claws, whereby use is made of an accessory in the form of an essentially horizontal plate with two edges that slant towards one another up to a projecting point from where a slot starts that extends along a centre line passing through the point and which has a width that is greater than the width of a claw of the three-point gripper and whereby the method comprises the following steps:
- the workpiece is gripped with the three-point gripper and placed on the projecting point of the accessory in such a position that the centre of gravity of the workpiece is vertically above the slot and at least one section of the workpiece protrudes over the slanting edges;
- the three-point gripper releases the workpiece;
- then the three-point gripper with open claws is positioned along the underside of the aforementioned plate in a position centred with respect to the workpiece that is such that the claws are around the workpiece and one of the claws extends through the slot;
- the three-point gripper grips the workpiece by closing the claws;
- the three-point gripper with the workpiece is taken away from the accessory by moving the three-point gripper in the longitudinal direction of the slot and the reversed workpiece is presented or stored in order to be able to grip the next workpiece.

An advantage is that such a method will enable the three-point gripper to grip the workpiece on the other side without a step being necessary to turn the workpiece around and without an extra machine being required to realise this.

This makes the method according to the invention simpler, more precise, faster and cheaper than the known methods.

Such a method can be applied to place the other side of a workpiece in a machine tool or to turn workpieces around in a stock without special devices or machines having to be provided or without this having to be done manually. Indeed, the robot arm that is used for taking the workpieces in and out of the machine tool is also used to turn the workpiece around without the intervention of another robotic machine.

Another advantage is that workpieces with a different diameter can be turned around using the accessory whereby the centre of gravity of a workpiece with a large diameter will be further away from the projecting point than the centre of gravity of a workpiece with a smaller diameter.

Preferably the accessory that uses slanting edges that include an angle of 30° with respect to the centre line.

This has the advantage that the claws of the three-point gripper move in a direction perpendicular to the slanting edges when gripping a workpiece on the accessory.

As a result the claws can come very close against the slanting edges so that workpieces with a small diameter can also be well gripped.

In a preferred variant the method comprises the step of lifting the workpiece a small distance from the accessory after the three-point gripper has gripped the workpiece on the accessory, after which the three-point gripper removes the workpiece from the accessory.

This has the advantage that any friction between the workpiece and the accessory can be avoided and that the accessory cannot be damaged as a result of this friction. The invention also concerns the use of an accessory for turning a workpiece around using a robot equipped with a three-point gripper with three claws, whereby the accessory in use comprises an essentially horizontally supported plate with two edges that slant towards one another up to a projecting point from where a slot in the plate starts and in that the width of the slot is greater than the width of a claw of the three point gripper.

Such an accessory is very simple to realise and can be used in a method according to the invention.

Preferably the slot extends along a centre line passing through the aforementioned point, such that accessories can always be centred on the accessory so that they can be gripped by the claws of the three-point gripper, such that the accessories are stable on the accessory.

The slanting edges of the accessory preferably include an angle of 60°. As already mentioned above, this has the advantage that the claws of the three-point gripper move in a direction perpendicular to the slanting edges when gripping a workpiece on the accessory, such that workpieces can be well gripped.

The width of the slot must at least be greater than the width of a claw, such that the claw can move through the slot without interference.

This has the advantage that the slot is just wide enough for the claw, but no wider than necessary. Too wide a slot would mean that workpieces with a small diameter could not be centred on the accessory because they could fall through the slot.

With the intention of better showing the characteristics of the invention, a few preferred variants of a method according to the invention and an accessory applied therein are described hereinafter by way of an example, without any limiting nature, with reference to the accompanying drawings, wherein:
figure 1 schematically shows a perspective view of an accessory used according to the method of the invention;
figure 2 shows a top view of figure 1;
figure 3 shows a first step of the method according to the invention;
figure 4 shows a detail of figure 3;
figure 5 shows a view according to arrow F5 of figure 4;
figure 6 shows a cross-section according to line VI-VI of figure 5;
figure 7 shows a side view of figure 5 according to arrow F7;
figures 8 and 9 show a variant of figure 6;
figures 10 and 11 show another variant of figure 6;
figure 12 shows a subsequent step of the method according to the invention;
figure 13 shows a detail of figure 12;
figure 14 shows another subsequent step of the method according to the invention.

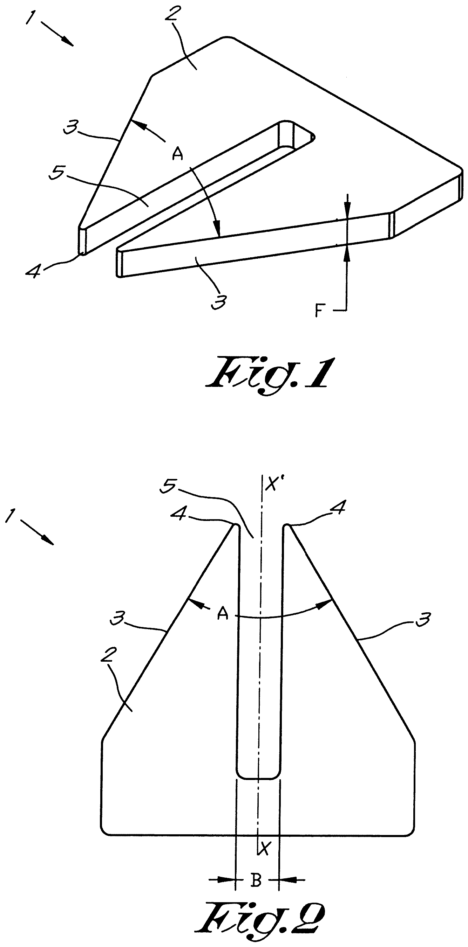

Figures 1 and 2 schematically show an accessory 1 for use in a method according to the invention.

The accessory 1 is essentially a plate 2 with two edges 3 that slant towards one another up to a projecting point 4.

In this case and preferably the slanting edges 3 include an angle A of 60°.

A slot 5 is also made in the plate 2, whereby this slot 5 starts from the projecting point 4 or links thereto.

In this case and preferably the slot 5 extends along a centre line X-X' of the aforementioned angle A, in other words along the axis of symmetry X-X' of the accessory 1 as indicated in figure 2.

Such an accessory 1 can be used in a method according to the invention for turning a workpiece 6 around using a robot 7 equipped with a three-point gripper 8 with three claws 9.

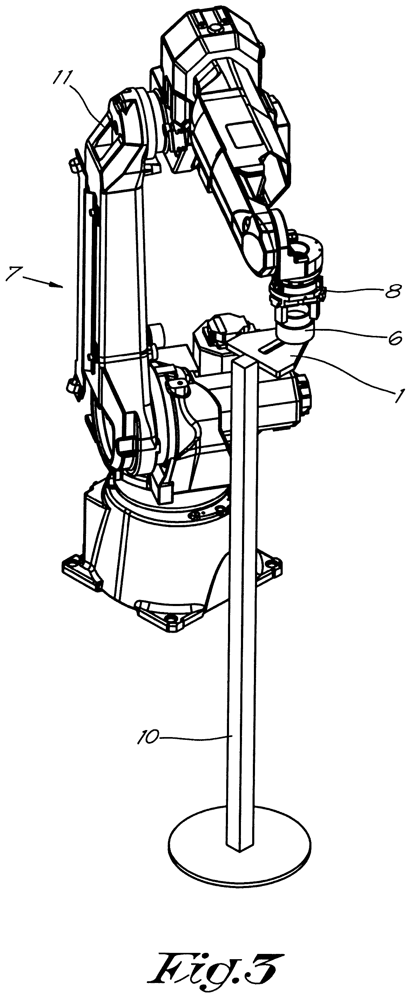

Figure 3 shows such a robot 7.

It should be noted here that the width B of the slot 5 of the accessory 1 is greater than the width C of a claw 9 of the three-point gripper 8.

The accessory is preferably affixed against a wall or on a support 10 as in figure 3. In this case this support 10 rests on the ground and ensures that the accessory 1 is at a suitable height and location before implementing the method using the robot 7.

The accessory 1 may or may not be permanently affixed against the wall or the support 10.

The robot 7 is provided with a robotic arm 11 that is driven by a computer system with suitable software, not shown in the drawings.

The arm 11 is provided at its end with a three-point gripper 8 with three radially movable claws 9 to be able to grip workpieces 6 and has six axes of rotation that enable different movements of the arm 11 and the three-point gripper 8 with respect to the arm 11. The claws 9 are at an angle of 120° with respect to one another, i.e. the movement directions of the claws 9 are at an angle of 120° with respect to one another.

Such a robot 7 with a robotic arm 11 with six axes of rotation and the control thereof using a computer system with suitable software is sufficiently well known and is thus not described in further detail here.

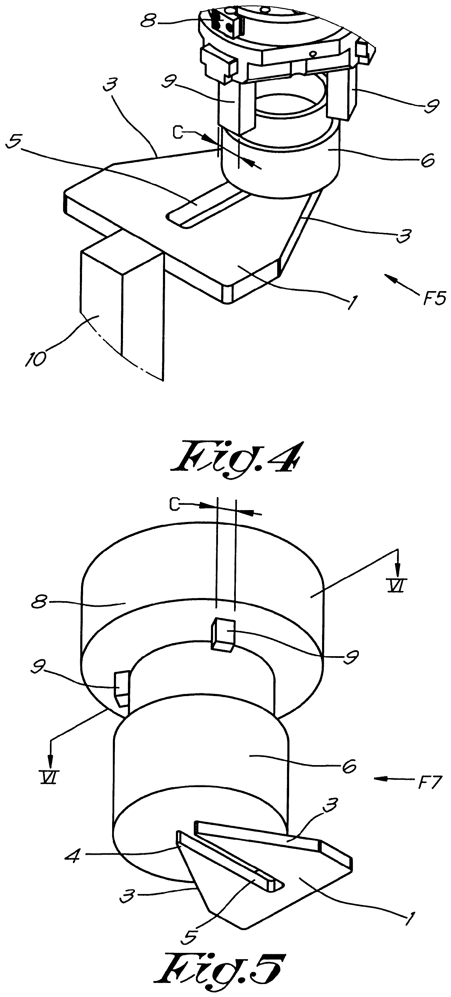

As shown in more detail in figures 4 and 5, in a first step the robot 7 takes a workpiece with the three-point gripper and places it on the projecting point 4 of the accessory 1.

The location and orientation of the accessory 1 is saved in the computer system so that the computer system can suitably control the robot 7 in the known way.

When positioning the workpiece 6 it is ensured that the centre of gravity of the workpiece 6 is vertically above the slot 5 and that at least a section 12 of the workpiece 6 protrudes over the slanting edges 3.

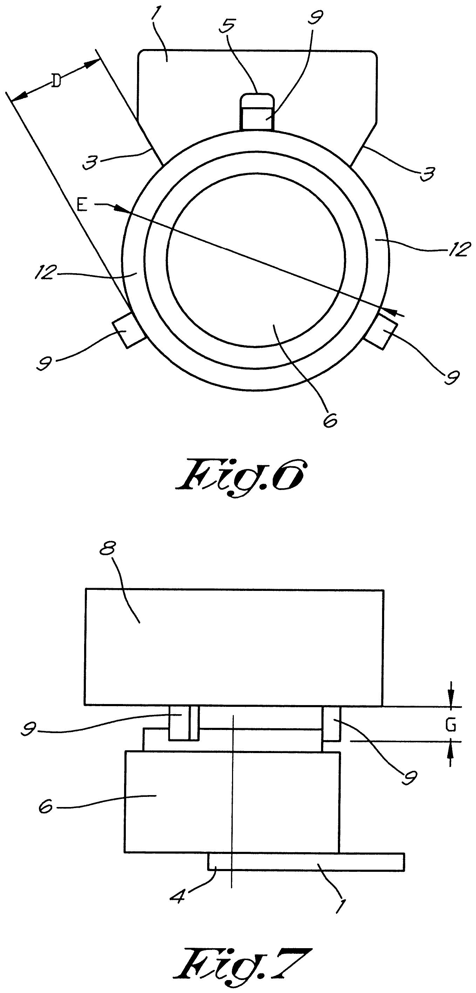

Figure 6 clearly shows that a section 12 of the workpiece 6 protrudes over the slanting edges 3 by a distance D.

Figure 7 shows that the centre of gravity is above the slot 5 so that the workpiece 6 rests stably on the accessory 1 without falling from it.

In other words the workpiece 6 stands centrally on the accessory 1.

In the examples of figure 3 to 7 a round workpiece 6 is shown with a relatively large diameter E.

However, round workpieces 6 with a smaller diameter E can also be turned around using the accessory 1 according to the invention and a method according to the invention.

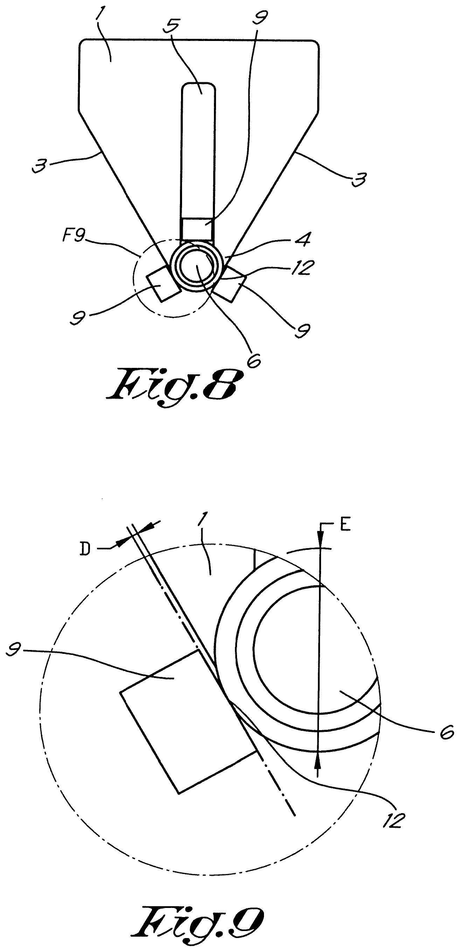

Figures 8 and 9 show the positioning of such small round workpieces. As can be seen in these drawings, smaller workpieces are placed close to the projecting point 4 of the accessory 1 to ensure that the edges 12 of this smaller workpiece 6 protrude over the slanting edges 3 of the accessory 1 by a certain distance D. Also note that the centre of gravity of this small workpiece 6 is above the slot 5.

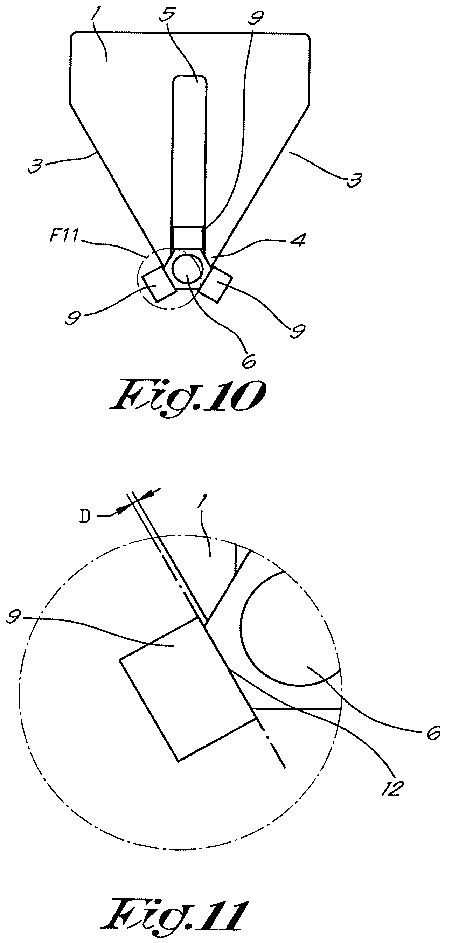

It is also possible to turn hexagonal workpieces 6 around, i.e. workpieces 6 with a hexagonal cross-section. This is shown in figures 10 and 11.

For such hexagonal workpieces 6, when placing the workpiece 6 on the accessory it is ensured that one of the claws 9 is vertically above the slot 5. This has the advantage that the surfaces of the hexagonal workpiece 6 are nicely aligned with respect to the slanting edges 3 of the accessory 1.

It is also possible that when placing all types of workpieces 6 it is ensured that one of the claws 9 is vertically above the slot 5.

When the workpiece 6 is on the accessory 1, the claws 9 of the three-point gripper 8 can be opened so that the three-point gripper 8 releases the workpiece 6.

In a subsequent step according to the method the three-point gripper 8 with open claws 9 is positioned along the underside of the accessory 1.

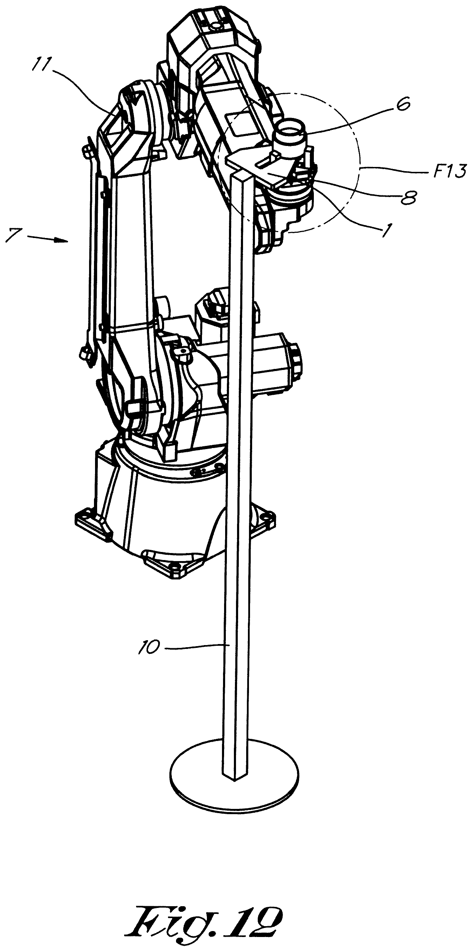

This is shown in figure 12.

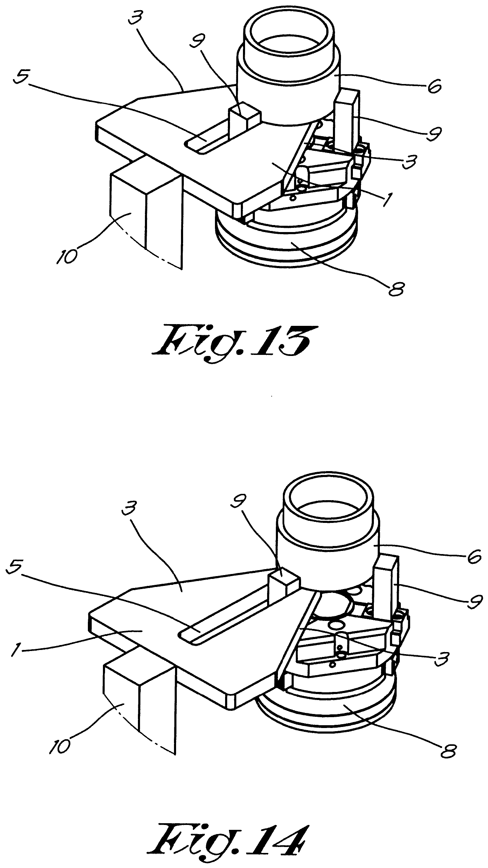

The three-point gripper 8 is centred with respect to the workpiece 6 so that the claws 9 are around the workpiece 6, as shown in the detail of figure 13.

One of the claws 9 hereby extends through the slot 5 as is clearly shown in figure 13. This is possible because the slot 5 is wider than the width C of the claw 9.

It is important that the slot 5 is wider than the width C of a claw 9 of the three-point gripper 8. The width B of the slot 5 determines the minimum dimensions that the diameter E of a workpiece 6 must have. As can be seen in figures 8 and 9, a workpiece with a diameter E that is smaller than the width B of the slot 5 cannot be supported by the accessory 1.

The thickness F of the accessory 1 is smaller than the length G of a claw 9, so that the claws 9 protrude above the accessory 1 by a certain distance to be able to grip the workpiece 1.

Then the claws 9 are closed so that the three-point gripper 8 can grip the workpiece 6.

Because the slot 5 extends along the centre line X-X' of the angle A, the direction of movement of the claw 9 that extends through the slot 5 will follow the longitudinal direction X-X' of the slot 5.

As a result of this orientation of the slot 5, the angle A of 60° between the slanting edges 3 and the fact that the claws 9 will move radially, the two other claws 9 will move perpendicularly to the slanting edges 3.

Because a section 12 of the workpiece goes over the slanting edges 3 of the accessory 1, these two claws 9 can immediately grip these aforementioned sections 12 without having to move the workpiece 6 so that a good and sturdy grip on the workpiece is obtained immediately.

Because the aforementioned two claws 9 move along a direction perpendicular to these slanting edges 3, with small workpieces 6 they can move very close against these edges 3 in order to grip the workpiece 6. This is shown in detail in figures 8 and 9.

In the case of a hexagonal workpiece 6, the sides of the workpiece 6 will be aligned with the claws 9 when one of the claws 9 extends through the slot 5, as can be seen in figures 10 and 11, because when positioning the hexagonal workpiece 6 it is ensured that one of the claws 9 is vertically above the slot 5.

In a next, not necessary, step of the method, the three-point gripper 8 can lift the workpiece 6 over a small distance from the accessory 1. This means that the three-point gripper 8 moves upwards over a small distance so that the workpiece 6 no longer rests on the accessory 1.

In a next step the three-point gripper 8 will remove the workpiece 6 by moving the three-point gripper 8 in the longitudinal direction X-X' of the slot 5.

The slot 5 hereby provides a guide, as it were, for the claws 9 when removing the workpiece 6.

Due to the orientation of the slot 5 along a centre line X-X' passing through the projecting point and the position of the claws 9, the claws 9 will not be hindered by the slanting edges 3 of the accessory 1 when moving the three-point gripper 8 in order to move the workpiece 6 from the accessory 1.

In this way the three-point gripper 8 has gripped the workpiece 6 at the other end than before the implementation of the method. In other words the workpiece 6 has been turned around.

The robot 7 can now either present the workpiece 6, for example to a machine tool or in a stock of workpieces 6 for storage of the reversed workpiece 6.

The method according to the invention is particularly suitable for being able to clamp a workpiece 6, that is in a machine tool, by its other end in the machine tool.

The robot 7 will hereby grip the workpiece 6 that is in the machine tool by the side already machined.

The clamped unmachined side is released by the jaws of the machine tool, after which the robot 7 will take the workpiece 6 from of the machine tool.

Then the robot 7 turns the workpiece 6 around according to a method according to the invention, whereby the robot 7 will grip the unmachined side with the three-point gripper 8.

The robot 7 can then present the workpiece 6 with the already machined side to the machine tool, after which the workpiece 6 can be clamped with the already machined side in the machine tool, and the machine tool can finish the unmachined side.

The present invention is by no means limited to the embodiments described as an example and shown in the drawings, but such a method and use of an accessory applied therein can be realised according to different variants, without departing from the scope of the invention as defined by the appended claims.

## Claims

1. Method for turning a workpiece (6) around using a robot (7) equipped with a three-point gripper (8) with three claws (9), whereby use is made of an accessory (1) in the form of an essentially horizontal plate (2) with two edges (3) that slant towards one another up to a projecting point (4) from where a slot (5) starts that extends along a centre line (X-X') passing through the point (4) and which has a width (B) that is greater than the width (C) of a claw (9) of the three-point gripper (8) and whereby the method comprises the following steps:
- the workpiece (6) is gripped with the three-point gripper (8) and placed on the projecting point (4) of the accessory (1) in such a position that the centre of gravity of the workpiece (6) is vertically above the slot (5) and at least one section (12) of the workpiece (6) protrudes over the slanting edges (3);
- the three-point gripper (8) releases the workpiece (6);
- then the three-point gripper (8) with open claws (9) is positioned along the underside of the aforementioned plate (2) in a position centred with respect to the workpiece (6) that is such that the claws (9) are around the workpiece (6) and one of the claws (9) extends through the slot (5);
- the three-point gripper (8) grips the workpiece (6) by closing the claws (9);
- the three-point gripper (8) with the workpiece (6) is taken away from the accessory (1) by moving the three-point gripper (8) in the longitudinal direction (X-X') of the slot (5) and the reversed workpiece (6) is presented or stored in order to be able to grip the next workpiece (6).

2. Method according to claim 1, **characterised in that** the accessory (1) that is used has slanting edges (3) that includes an angle of 30° with respect to the centre line (X-X').

3. Method according to claim 1 or 2, **characterised in that** when placing the workpiece (6) on the accessory (1) one of the claws (9) is vertically above the slot (5).

4. Method according to any one of the previous claims, **characterised in that** after the three-point gripper (8) has gripped the workpiece (6) on the accessory (1), the method comprises the step of lifting the workpiece (6) a small distance from the accessory (1), after which the three-point gripper (8) removes the workpiece (6) from the accessory (1).

5. Method according to any one of the previous claims, **characterised in that** the accessory (1) that is used is mounted against a wall or on a support (10) that rests on the ground.

6. Method according to any one of the previous claims, **characterised in that** the workpiece (6) that the three-point gripper (8) grips is in a machine tool and/or that the reversed workpiece (6) is placed in a machine tool by the robot (7).

7. Method according to any one of the previous claims, **characterised in that** the method is intended for turning around round or hexagonal workpieces (6).

8. Use of an accessory for turning a workpiece (6) around using a robot (7) equipped with a three-point gripper (8) with three claws (9), whereby the accessory (1) in use comprises an essentially horizontally supported plate (2) with two edges (3) that slant towards one another up to a projecting point (4) from where a slot (5) in the plate starts and in that the width (B) of the slot (5) is greater than the width (C) of a claw (9) of the three-point gripper (8).

9. Use according to claim 8, **characterised in that** the slot (5) extends along a centre line (X-X') passing through the aforementioned point (4).

10. Use according to claim 8 or 9, **characterised in that** the slanting edges (3) include an angle (A) of 60°.

11. Use according to claim 10, **characterised in that** the width (B) of the slot (5) is wider than the width (C) of a claw (9) of the three-point gripper (8).

12. Use according to any one of the claims 8 to 11, **characterised in that** the accessory (1) is mounted against a wall or that the accessory (1) is mounted on a support (10) that rests on the ground with the plate (2) in an essentially horizontal position in such a way that the workpiece (6) can be placed on the plate (2) and that the gripper (8) can be positioned along the underside of said plate (2) to grip the workpiece (6).

## Patentansprüche

1. Verfahren zum Umdrehen eines Werkstücks (6) unter Verwendung eines Roboters (7), der mit einem Dreipunktgreifer (8) mit drei Klauen (9) ausgestattet ist, wobei ein Zubehör (1) in Form einer im Wesentlichen horizontalen Platte (2) mit zwei Kanten (3) verwendet wird, die zueinander bis zu einem vorspringenden Punkt (4) hin geneigt sind, von dem ein Schlitz (5) ausgeht, der sich entlang einer durch den Punkt (4) verlaufenden Mittellinie (X-X') erstreckt und der eine Breite (B) aufweist, die größer ist als die Breite (C) einer Klaue (9) des Dreipunktgreifers (8), und wobei das Verfahren die folgenden Schritte umfasst:
- das Werkstück (6) wird mit dem Dreipunktgreifer (8) gegriffen und auf der hervorstehenden Spitze (4) des Zubehörs (1) in einer solchen Position aufgesetzt, dass der Schwerpunkt des Werkstücks (6) senkrecht über dem Schlitz (5) liegt und zumindest ein Abschnitt (12) des Werkstücks (6) über die geneigten Kanten (3) hinausragt;
- der Dreipunktgreifer (8) gibt das Werkstück (6) frei;
- dann wird der Dreipunktgreifer (8) mit geöffneten Klauen (9) entlang der Unterseite der vorgenannten Platte (2) in einer in Bezug auf das Werkstück (6) zentrierten Position positioniert, derart, dass die Klauen (9) um das Werkstück (6) herum liegen und eine der Klauen (9) durch den Schlitz (5) ragt;
- der Dreipunktgreifer (8) greift das Werkstück (6) durch Schließen der Klauen (9);
- der Dreipunktgreifer (8) mit dem Werkstück (6) wird durch Verfahren des Dreipunktgreifers (8) in Längsrichtung (X-X') des Schlitzes (5) aus dem Zubehör (1) entnommen und das umgedrehte Werkstück (6) bereitgestellt bzw. abgelegt, um das nächste Werkstück (6) greifen zu können.

2. Verfahren nach Anspruch 1, **dadurch gekennzeichnet, dass** das verwendete Zubehör (1) geneigte Kanten (3) aufweist, die einen Winkel von 30° in Bezug auf die Mittellinie (X-X') einschließen.

3. Verfahren nach Anspruch 1 oder 2, **dadurch gekennzeichnet, dass** beim Aufsetzen des Werkstücks (6) auf das Zubehör (1) eine der Klauen (9) senkrecht über dem Schlitz (5) steht.

4. Verfahren nach einem der vorhergehenden Ansprüche,
**dadurch gekennzeichnet, dass** nachdem der Dreipunktgreifer (8) das Werkstück (6) auf dem Zubehör (1) gegriffen hat, das Verfahren den Schritt des Anhebens des Werkstücks (6) über einen kleinen Abstand von dem Zubehör (1) umfasst, wonach der Dreipunktgreifer (8) das Werkstück (6) von dem Zubehör (1) entfernt.

5. Verfahren nach einem der vorhergehenden Ansprüche,
**dadurch gekennzeichnet, dass**das verwendete Zubehör (1) an einer Wand oder auf einem auf dem Boden stehenden Träger (10) montiert ist.

6. Verfahren nach einem der vorhergehenden Ansprüche,
**dadurch gekennzeichnet, dass** sich das vom Dreipunktgreifer (8) gegriffene Werkstück (6) in einer Werkzeugmaschine befindet und/oder dass das umgedrehte Werkstück (6) von dem Roboter (7) in eine Werkzeugmaschine eingelegt wird.

7. Verfahren nach einem der vorhergehenden Ansprüche,
**dadurch gekennzeichnet, dass** das Verfahren zum Umdrehen von runden oder sechseckigen Werkstücken (6) vorgesehen ist.

8. Verwendung eines Zubehörs zum Wenden eines Werkstücks (6) mittels eines Roboters (7), der mit einem Dreipunktgreifer (8) mit drei Klauen (9) ausgestattet ist, wobei das Zubehör (1) im verwendeten Zustand eine im Wesentlichen horizontal gelagerte Platte (2) mit zwei Kanten (3) aufweist, die zueinander bis zu einem vorspringenden Punkt (4) hin geneigt sind, von dem aus ein Schlitz (5) in der Platte ausgeht, und wobei die Breite (B) des Schlitzes (5) größer ist als die Breite (C) einer Klaue (9) des Dreipunktgreifers (8).

9. Verwendung nach Anspruch 8, **dadurch gekennzeichnet, dass** der Schlitz (5) sich entlang einer Mittellinie (X-X') erstreckt, die durch den vorgenannten Punkt (4) verläuft.

10. Verwendung nach Anspruch 8 oder 9, **dadurch gekennzeichnet, dass** die geneigten Kanten (3) einen Winkel (A) von 60° einschließen.

11. Verwendung nach Anspruch 10, **dadurch gekennzeichnet, dass** die Breite (B) des Schlitzes (5) größer ist als die Breite (C) einer Klaue (9) des Dreipunktgreifers (8).

12. Verwendung nach einem der Ansprüche 8 bis 11,
**dadurch gekennzeichnet, dass** das Zubehör (1) an einer Wand montiert ist oder dass das Zubehör (1) auf einem Träger (10) montiert ist, der mit der Platte (2) in einer im Wesentlichen horizontalen Position auf dem Boden ruht, so dass das Werkstück (6) auf der Platte (2) platziert werden kann und dass der Greifer (8) entlang der Unterseite der Platte (2) positioniert werden kann, um das Werkstück (6) zu greifen.

## Revendications

1. - Procédé de tournage d'une pièce à usiner (6) à l'aide d'un robot (7) équipé d'une pince à trois points (8) avec trois griffes (9), moyennant quoi une utilisation est faite d'un accessoire (1) sous la forme d'une plaque (2) essentiellement horizontale avec deux bords (3) inclinés l'un vers l'autre jusqu'à un point saillant (4) d'où part une fente (5) qui s'étend le long d'une ligne médiane (X-X') passant par le point (4) et qui a une largeur (B) supérieure à la largeur (C) d'une griffe (9) de la pince à trois points (8), et moyennant quoi le procédé comprend les étapes suivantes :
- la pièce à usiner (6) est saisie avec la pince à trois points (8) et placée sur le point saillant (4) de l'accessoire (1) dans une position telle que le centre de gravité de la pièce à usiner (6) se trouve verticalement au-dessus de la fente (5) et qu'au moins une section (12) de la pièce à usiner (6) fait saillie sur les bords inclinés (3) ;
- la pince à trois points (8) libère la pièce à usiner (6) ;
- ensuite, la pince à trois points (8), avec les griffes ouvertes (9), est positionnée le long de la face inférieure de la plaque (2) susmentionnée dans une position centrée par rapport à la pièce à usiner (6) telle que les griffes (9) entourent la pièce à usiner (6) et qu'une des griffes (9) s'étende à travers la fente (5) ;
- la pince à trois points (8) saisit la pièce à usiner (6) en fermant les griffes (9) ;
- la pince à trois points (8) avec la pièce à usiner (6) est retirée de l'accessoire (1) en déplaçant la pince à trois points (8) dans la direction longitudinale (X-X') de la fente (5) et la pièce à usiner inversée (6) est présentée ou stockée afin de pouvoir saisir la pièce à usiner suivante (6).

2. - Procédé selon la revendication 1, **caractérisé en ce que** l'accessoire (1) utilisé a des bords inclinés (3) qui comportent un angle de 30° par rapport à la ligne médiane (X-X').

3. - Procédé selon la revendication 1 ou 2, **caractérisé en ce que** lors du placement de la pièce à usiner (6) sur l'accessoire (1), l'une des griffes (9) se trouve verticalement au-dessus de la fente (5).

4. - Procédé selon l'une quelconque des revendications précédentes,
**caractérisé en ce que,** après que la pince à trois points (8) a saisi la pièce à usiner (6) sur l'accessoire (1), le procédé comprend l'étape consistant à soulever la pièce à usiner (6) à une faible distance de l'accessoire (1), après quoi la pince à trois points (8) retire la pièce à usiner (6) de l'accessoire (1).

5. - Procédé selon l'une quelconque des revendications précédentes,
**caractérisé en ce que** l'accessoire (1) utilisé est monté contre un mur ou sur un support (10) reposant sur le sol.

6. - Procédé selon l'une quelconque des revendications précédentes,
**caractérisé en ce que** la pièce à usiner (6) que la pince à trois points (8) saisit se trouve dans une machine-outil et/ou que la pièce à usiner inversée (6) est placée dans une machine-outil par le robot (7).

7. - Procédé selon l'une quelconque des revendications précédentes,
**caractérisé en ce que** le procédé est destiné au tournage de pièces à usiner rondes ou hexagonales (6).

8. - Utilisation d'un accessoire pour faire tourner une pièce à usiner (6) à l'aide d'un robot (7) équipé d'une pince à trois points (8) avec trois griffes (9), moyennant quoi l'accessoire (1) utilisé comprend une plaque (2) supportée essentiellement horizontalement avec deux bords (3) inclinés l'un vers l'autre jusqu'à un point saillant (4) d'où part une fente (5) dans la plaque et la largeur (B) de la fente (5) est supérieure à la largeur (C) d'une griffe (9) de la pince à trois points (8).

9. - Utilisation selon la revendication 8, **caractérisée en ce que** la fente (5) s'étend le long d'une ligne médiane (X-X') passant par le point (4) susmentionné.

10. - Utilisation selon la revendication 8 ou 9, **caractérisée en ce que** les bords inclinés (3) comportent un angle (A) de 60°.

11. - Utilisation selon la revendication 10, **caractérisée en ce que** la largeur (B) de la fente (5) est supérieure à la largeur (C) d'une griffe (9) de la pince à trois points (8).

12. - Utilisation selon l'une quelconque des revendications 8 à 11, **caractérisée en ce que** l'accessoire (1) est monté contre un mur ou que l'accessoire (1) est monté sur un support (10) qui repose sur le sol avec la plaque (2) dans une position essentiellement horizontale de manière à ce que la pièce à usiner (6) puisse être placée sur la plaque (2) et que la pince (8) puisse être positionnée le long de la face inférieure de ladite plaque (2) pour saisir la pièce à usiner (6).
